Europäisches Patentamt

(19) European Patent Office

Office européen des brevets

(11) Numéro de publication: **0 176 393**
**B1**

(12) **FASCICULE DE BREVET EUROPÉEN**

(45) Date de publication du fascicule du brevet:
04.01.89

(51) Int. Cl.⁴: **B 01 D 53/04**, A 61 M 16/00

(21) Numéro de dépôt: **85401659.9**

(22) Date de dépôt: **20.08.85**

(54) **Procédé et installation de production d'air suroxygéné par adsorption.**

(30) Priorité: **24.08.84 FR 8413160**

(43) Date de publication de la demande:
**02.04.86 Bulletin 86/14**

(45) Mention de la délivrance du brevet:
**04.01.89 Bulletin 89/1**

(84) Etats contractants désignés:
**AT BE CH DE FR GB IT LI LU NL SE**

(56) Documents cité:
**FR-A-2 289 440**
**US-A-4 194 891**
**US-A-4 376 640**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Dognin, Paul, 62, rue Brancion, F-75015 Paris (FR)**
Inventeur: **Gauthier, Jean-Louis, 6, rue Maurice de la Cizeranne, F-75007 Paris (FR)**

(74) Mandataire: **Leclercq, Maurice, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

LIBER, STOCKHOLM 1989

## Description

L'invention concerne la produktion d'air suroxygéné par adsorption, du genre mettant en oeuvre un compresseur d'air, deux colonnes d'adorption à tamis moléculaire, successivement et du façon cyclique en phase de production sous pression croissante, en phase d'equilibrage mutuel, et en phase de régénération à la pression atmosphérique ainsi qu'une capacité-tampon unique sur une conduite de production d'air suroxygéné.

On connait par US-A-4 376 640 une installation pour la production de gaz enrichi par adsorption du genre comprenant un compresseur raccordé par vannes aux entrés de deux colonnes d'adsorption dans les sorties sont raccordées par des conduites et des vannes à un reservoir tampon et entre elles par une conduité et des vannes. On assure par pilotage des vannes une productions intermittente de gaz enrichi altenativement fourni par l'une ou l'autre des colonnes.

Pour la production d'air suroxygéné généralement utilisable en oxygénothérapine à domicile, on doit concilier à la fois légèreté, faibles poids et encombrement de l'installation avec un rendement en oxygène le plus élevé possible.

La présente invention a pour objet des perfectionnements aux procédés et installations connus qui permettent, sans accroître ni le poids, ni le volume, ni le coût de réalisation, d'assurer un rendement en oxygène nettement amélioré.

Elle concerne un procédé et une installation de production d'air suroxygéné tels que revendiqués.

Grâce aux orifices calibrés, lors d'un cycle de fonctionnement, il se produit d'une part à partir de la mise en communication des deux colonnes jusqu'à équilibrage final des pressions, un débit dérivé d'air suroxygéné vers la capacité-tampon, qui est sensiblement égal à celui fourni par ladite capacité-tampon; d'autre part, pendant la phase de montée en pression de l'adsorbeur en cours de production, un débit d'élution dérivé vers l'adsorbeur en cours de régénération pour en assurer le nettoyage.

Les caractéristiques et avantages de l'invention ressortiront d'ailleurs de la description qui suit en référence aux dessins annexés dans lesquels:

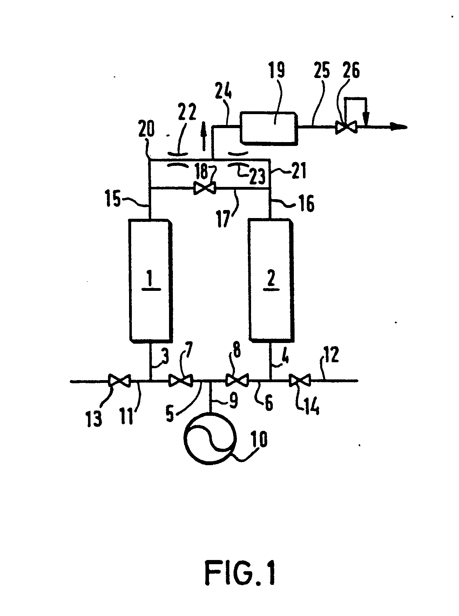

- la figure 1 est une vue schématique d'une installation conforme à l'invention;
- la figure 2 est un diagramme pression P en fonction du temps t, montrant les pressions à la sortie du compresseur (courbe A), dans une colonne d'adsorbeurs (cours B), dans l'autre colonne d'adsorbeur (courbe C), et dans la capacité-tampon (courbe D).

En se référant aux dessins annexés, une installation de production d'air suroxygéné selon l'invention comporte deux colonnes d'adsorbeur 1 et 2 dont des entrées 3 et 4 sont reliées d'une part par des conduites 5, 6 et des électrovannes 7 et 8 à la sortie 9 d'un compresseur 10, d'autre part à l'air libre par des conduites 11, 12 et des électrovannes 13, 14 respectivement.

Les sorties 15 et 16 des colonnes 1 et 2 respectivement sont raccordées entre elles par une conduite 17 et une électrovanne 18 d'une part, et à un entrée 24 d'une capacité-tampon 19 par des conduites 20 et 21 à orifices calibrés 22, 23 respectivement constitués par des vannes à ouverture pré-réglée.

La sortie de la capacité-tampon 19 est raccordée à l'utilisation par une conduite 25 à régulateur de pression 26.

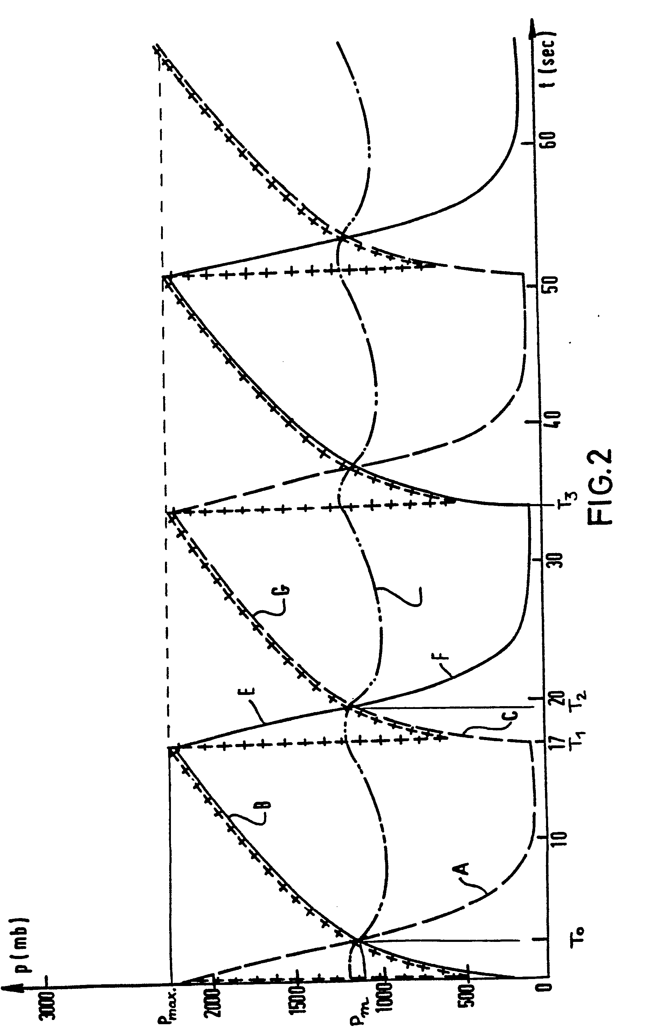

En se référant maintenant à la figure 2, le fonctionnement de l'installation est le suivant:

Dans une première phase (de l'instant $T_0$ à l'instant $T_1$ durée: 17 secondes), les vannes 7 et 14 sont ouvertes, tandis que les vannes 8, 13 et 18 sont fermées. L'adsorbeur 1 est en phase de production et l'adsorbeur 2 en phase de régénération. Ce dernier est mis à la pression atmosphérique par la conduite 12 et balayé à contre-courant de la sortie 16 vers l'entrée 4 par un débit de gaz (débit d'élution) dérivé du débit de production issu de l'adsorbeur 1 via la conduite 21 et l'orifice calibré 23. Le débit restant, qui traverse l'orifice calibré 22, la capacité-tampon 19 et le régulateur de pression 26 via les conduites 24 et 25, est destiné à la consommation.

Durant cette phase, l'adsorbeur 1 monte en pression selon (B) jusqu'à la pression maximale Pmax, alors que la pression dans l'adsorbeur 2 décroît jusqu'à une pression très voisine de la pression atmosphérique selon A.

Pendant la phase suivante (de l'instant $T_1$ à l'instant $T_2$: durée 2 secondes), les vannes 8 et 18 sont ouvertes, tandis que les vannes 7, 13 et 14 sont férmées. L'adsorbeur 1 est en dépressurisation selon (E) alors que l'adsorbeur 2 est en pressurisation selon (C) sous l'action d'équilibrage avec l'adsorbeur 1 et l'effet du compresseur 10 débitant par l'intermédiaire de l'électrovanne 8, jusqu'à l'obtention d'un équilibre de pression à Pm entre les deux adsorbeurs 1 et 2 et la capacité-tampon 19.

Pendant la phase qui va de l'instant $T_2$ à l'instant $T_3$, les vannes 8 et 13 sont ouvertes, tandis que les vannes 7, 14 et 18 sont formées et on retrouve ici, sans les décrire, les mêmes phase que l'on a rencontré précédemment, mais avec inversion des adsorbeurs 1 et 2 et des vannes correspondantes, l'adsorbeur 1 étant en dépressurisation selon (F) alors que l'adsorbeur 2 est en pressurisation selon (G).

## Revendications

1. Procédé de production d'air suroxygéné par adsorption, du genre où l'on admet de l'air dans l'une d'une paire de colonnes d'adsorption à tamis moléculaire (1) et (2), successivement et de façon cyclique en phase de production sous pression croissante (B), en phase d'équilibrage mutuel (E - C), avec poursuite d'admission d'air vers l'absorbeur en cours de dépressurisation, puis en régénération par dépressurisation finale, caractérisé par la combinaison des mesures suivantes:

a) jusqu'à la fin de la phase d'équilibrage mutuel, l'adsorbeur en dépressurisation (E) continue à assurer un débit de gaz de production;

b) pendant toute la phase finale de dépressurisation (F) depuis l'équilibrage, un débit dérivé de gaz de production balaie, dans le sens de la dépressurisation, l'adsorbeur en cours de dépressurisation.

2. Installation de production d'air suroxygéné, destinée à la mise en oeuvre du procédé selon la revendication 1, du genre comprenant un compresseur (10) raccordé par vannes (7, 8) aux entrées de deux colonnes d'adsorption (1, 2), lesdites entrées étant elles-même reliées à l'air libre par des conduites (11, 12) à vannes (13, 14 respectivement), tandis que les sorties des colonnes (1, 2) sont raccordées par des conduites (20, 21 respectivement et 24) à un réservoir tampon (19) dont la sortie est équipée d'un régulateur de pression (26), les dites sorties de colonnes (1, 2) étant reliées entre elles par une conduite (17) à électrovanne (18), caractérisé en ce que chacune des conduites (20, 21) de liaison d'un adsorbeur avec le reservoir tampon (19) est équipé exclusivement d'un orifice calibré (22, 23 respectivement).

## Patentansprüche

1. Verfahren zur Herstellung von mit Sauerstoff angereicherter Luft durch Adsorption, bei dem man Luft in eine eines Paares von Adsorptionskolonnen mit Molekularsieb (1) und (2) nacheinander und zyklisch in einer Produktionsphase unter zunehmendem Druck (B), einer wechselseitigen Äquilibrierungsphase (E - C) mit Einlassen von Luft zu dem Adsober im Verlauf der Druckerniedrigung und sodann einer Regenerierung durch Enddruckerniedrigung läßt, gekennzeichnet durch die Kombination folgende Maßnahmen:

a) bis zum Ende der wechselseitigen Äquilibrierungsphase stellt der Adsorber mit Druckerniedrigung (E) fortgesetzt einen Durchsatz von produktionsgas sicher;

b) während der gesamten Endphase der Druckerniedrigung (F) von der Äquilibrierung an durchspült ein Durchsatz von Produktionsgas im Sinne der Druckerniedrigung den Adsorber im Verlauf der Duckerniedrigung.

2. Vorrichtung zur Herstellung von sauerstoffangereicherter Luft zur Durchführung des Verfahrens nach Anspruch 1 mit einem Verdichter (10), der über Ventile (7, 8) mit den Eingängen zweier Adsorptionskolonnen (1, 2) verbunden ist, wobei diese Eingänge selbst über Leitungen (11, 12) mit Ventilen (13 bzw. 14 ) mit der freien Luft verbunden sind, während die Ausgänge der Kolonnen (1, 2) über Leitungen (20 bzw. 21 und 24) mit einem Pufferbehälter (19) verbunden sind, dessen Ausgang mit einem Druckregler (26) versehen ist, wobei die Ausgänge der Kolonnen (1, 2) untereinander durch eine Leitung (17) mit Elektroventil (18) verbunden sind, dadurch gekennzeichnet, daß jede der Leitungen (20, 21) der Verbindung eines Adsorbers mit dem Pufferbehälter (19) ausschließlich mit einer kalibrierten Öffnung (22 bzw. 23) versehen ist.

## Claims

1. Process for the production of superoxygenated air by adsorption, of the type in which air is admitted to one of a pair of molecular sieve adsorption columns (1) and (2), successively and in a cyclic manner in a production stage under rising pressure (B), in a mutual equilibration stage (E - C), with contination of air intake towards the adsorber in the corse of being depressurised, then in the course of regeneration by final depressurisation, characterised by the combination of the following measures:

a) until the end of the mutual equilibration stage, the adsorber under depressurisation (E) continues to provide a flow of production gas;

b) throughout the final depressurisation stage (F) after the equilibration, a flow drawn from the production gas flushes the adsorber in the course of depressurisation, in the direction of depressurisation.

2. Installation for the production of superoxygenated air, intended for the application of the process according to claim 1, of the type comprising a compressor (10) connected via valves (7, 8) to the inlets of two adsorption columns (1, 2), the said inlets themselves being connected to the ambient atmosphere via conduits (11, 12) having valves (13, 14 - respectively), whereas the outlets of the columns (1, 2) are connected via conduits (20, 21 respectively and 24) to a buffer reservoir (19) the outlet of which is equipped with a pressure regulator (26), the said outlets of the columns (1, 2) being interconnected by a conduit (17) with an electromagnetic valve (18), characterised in that each of the conduits (20, 21) for connection of an adsorber to the buffer reservoir (19) is provided exclusively with a calibrated orifice (22, 23, respectively).

FIG.1

FIG.2